Europäisches Patentamt

European Patent Office

Office européen des brevets

(11) Numéro de publication: **0 286 192 B1**

(12) **FASCICULE DE BREVET EUROPEEN**

(45) Date de publication de fascicule du brevet:
**15.01.92**

(21) Numéro de dépôt: **88200650.5**

(22) Date de dépôt: **06.04.88**

(51) Int. Cl.$^5$: **G06F 15/70, H04N 5/14**

(54) **Procédé et dispositif d'estimation de mouvement dans une séquence d'images.**

(30) Priorité: **10.04.87 FR 8705121**

(43) Date de publication de la demande:
**12.10.88 Bulletin 88/41**

(45) Mention de la délivrance du brevet:
**15.01.92 Bulletin 92/03**

(84) Etats contractants désignés:
**AT DE FR GB IT**

(56) Documents cités:
**FR-A- 2 590 701**

**COMPUTER VISION, GRAPHICS, AND IMAGE PROCESSING, vol. 21, no. 2, février 1983, pages 262-279, Academic Press Inc., New York, US; M. YACHIDA: "Determining velocity maps by spatio-temporal neighborhoods from image sequences"**

(73) Titulaire: **LABORATOIRES D'ELECTRONIQUE PHILIPS
3, Avenue Descartes
F-94450 Limeil-Brévannes(FR)**

(84) Etats contractants désignés:
**FR**

Titulaire: **N.V. Philips' Gloeilampenfabrieken
Groenewoudseweg 1
NL-5621 BA Eindhoven(NL)**

(84) Etats contractants désignés:
**DE GB IT AT**

(72) Inventeur: **Haghiri, Mohammad-Rèza
Société Civile S.P.I.D. 209 rue l'Université
F-75007 Paris(FR)**
Inventeur: **Boutrois, Bertrand
Société Civile S.P.I.D. 209 rue l'Université
F-75007 Paris(FR)**

(74) Mandataire: **Landousy, Christian et al
Société Civile S.P.I.D. 156, Boulevard Haussmann
F-75008 Paris(FR)**

## Description

La présente invention concerne un procédé et un dispositif d'estimation de mouvement dans une séquence d'images. Une telle invention est applicable essentiellement dans le domaine du traitement de signal numérique, pour la réalisation de fonctions telles que compression d'information, amélioration de qualité d'images, poursuite de cibles, etc... et, par exemple, dans des dispositifs de codage d'images numériques, pour la réduction du débit des informations à transmettre, ou à enregistrer lorsqu'il s'agit par exemple de magnétoscopes.

L'article de A.N. Netravali et J.D. Robbins, "Motion-Compensated Television coding : Part I", paru dans la revue "The Bell System Technical Journal", volume 58, n° 3, mars 1979, décrit un procédé d'estimation de mouvement qui prévoit essentiellement d'opérer une classification des éléments d'image en éléments fixes et en éléments mobiles, et d'estimer les mouvements à l'aide d'une méthode de prédiction adaptative utilisant des éléments d'une image précédente pour les comparer, en position et en luminosité, à ceux de l'image courante. Ce procédé d'estimation de mouvement point par point, connu sous le nom de procédé pel-récursif, permet d'associer à chaque point d'image un vecteur de déplacement de telle sorte que la différence entre deux images successives compte tenu des mouvements estimés soit d'énergie minimale, la minimisation s'effectuant dans le cas présent à l'aide de la méthode de Newton-Raphson.

L'article de C. Cafforio et F. Rocca, "Methods for measuring small displacement of television images", paru dans la revue "IEEE Transactions on Information Theory", IT-22, septembre 1976, pages 573 à 579, utilise aussi ce principe mais opère par bloc de points et attribue le même vecteur de déplacement à tous les points d'un bloc. Le procédé décrit dans cet article présente cependant l'inconvénient de ne pas tenir compte de la corrélation entre des blocs voisins.

Le but de l'invention est de proposer un procédé d'estimation de mouvement dans une séquence d'images remédiant à cet inconvénient.

L'invention concerne à cet effet un procédé remarquable en ce qu'il consiste à :

(A) prévoir par rapport à l'image courante la sauvegarde de l'image précédente pour constituer une image de référence ;

(B) définir pour les blocs trois groupes de classification en blocs fixes, en blocs mobiles et en blocs dits découverts, groupes dans lesquels les blocs vont, avec un retard de L blocs, être classés au fur et à mesure du balayage de l'image, en examinant un nombre déterminé de séquences de groupes possibles pour les L blocs qui suivent le bloc courant X considéré et selon un critère de classification déterminé, ledit critère étant, pour les blocs fixes et mobiles, la différence de luminosité entre deux images successives, en tenant compte du déplacement des blocs d'une image à l'autre pour les blocs mobiles, et, pour les blocs découverts, la différence de luminosité entre deux lignes adjacentes ;

(C) construire un arbre de classification dont les $3^L$ branches, à chaque niveau successif, sont en nombre égal à celui des groupes possibles et correspondent, du premier au L-ième niveau, aux séquences des groupes possibles pour les L blocs successifs considérés de la séquence d'images ;

(D) associer à chaque branche de chaque niveau deux paramètres :

(a) un premier paramètre dit vecteur de déplacement, représentatif du déplacement éventuel du bloc par rapport à l'image ou à la ligne précédente et calculé, à l'aide d'une méthode récursive d'estimation de déplacement, pour le point central représentatif dudit bloc ;

(b) un deuxième paramètre dit distorsion cumulée, représentatif de la somme cumulée des erreurs de classification des blocs précédents, les groupes de ces blocs étant ceux des branches de l'arbre parcourues pour arriver à la branche courante, chaque erreur de classification étant rendue minimale en tenant compte de l'influence d'un déplacement estimé pour un bloc sur le déplacement estimé pour les L blocs suivants, et ladite influence n'étant examinée, parmi les $3^L$ branches possibles de l'arbre, que pour M branches de plus faible distorsion cumulée, dites survivantes, M étant un nombre limite choisi nettement inférieur au nombre maximal de branches $3^L$ ;

(E) au terme de cette procédure portant sur L blocs, prendre une décision de type majoritaire quant au groupe effectif et au vecteur de déplacement du bloc situé par rapport au bloc courant L blocs plus tôt, ladite décision étant prise en examinant les branches survivantes et en classant chaque bloc situé L blocs plus tôt dans le groupe auquel correspond le plus grand nombre de ces branches survivantes, le vecteur de déplacement correspondant étant alors considéré comme le déplacement de ce bloc situé L blocs plus tôt, et ladite procédure de décision étant répétée à l'identique sauf pour les L derniers blocs de la séquence d'images où l'on évite de prendre une décision.

Le procédé ainsi proposé est avantageux en ce sens qu'on tient compte de la corrélation éventuelle entre blocs, en attendant l'arrivée d'un certain nombre de blocs pour prendre une décision sur la classe d'un bloc déterminé. D'autre part, le procédé prévoit une classification plus précise des blocs d'image, faisant intervenir une catégorie dite de blocs découverts qui permet la réinitialisation du procédé d'estimation de mouvement à l'emplacement des contours des objets en mouvement.

Afin de limiter la complexité de mise en oeuvre du procédé, l'influence d'un déplacement estimé pour un bloc sur le déplacement estimé pour les L blocs suivants n'est examinée, parmi les $3^L$ branches possibles de l'arbre, que pour M branches de plus faible distorsion cumulée, dites survivantes, M étant un nombre limite choisi nettement inférieur au nombre maximal de branches. La décision de type majoritaire est prise en examinant les branches survivantes et en classant chaque bloc situé L blocs plus tôt dans le groupe auquel correspond le plus grand nombre de ces branches survivantes. Le vecteur de déplacement correspondant est alors considéré comme le déplacement de ce bloc situé L blocs plus tôt, et ladite procédure de décision est répétée à l'identique sauf pour les L derniers blocs de la séquence d'images où l'on évite de prendre une décision.

L'invention concerne également, pour la mise en oeuvre de ce procédé, un dispositif d'estimation de mouvement dans une séquence d'images remarquable en ce qu'il comprend une mémoire d'image recevant de la connexion d'entrée, par l'intermédiaire d'un circuit à retard d'image, la séquence d'images numérisée, un circuit à retard de ligne recevant également la séquence d'images numérisée, et un estimateur récursif de déplacement, recevant également la séquence d'images numérisée pour actualiser à chaque extension de l'arbre de classification les vecteurs de déplacements relatifs aux noeuds de l'arbre et les envoyer vers un circuit de décision à retardement, lesdits vecteurs étant également envoyés vers la mémoire d'image qui renvoie audit estimateur et audit circuit de décision la luminosité des points homologues du point X représentatif du bloc courant dans l'image précédente.

Les particularités et avantages de l'invention apparaîtront maintenant de façon plus détaillée dans la description qui suit et dans les dessins annexés, donnés à titre d'exemple et dans lesquels :

- la figure 1 montre un exemple d'arbre de classification des blocs d'une images, dans lequel on opère pour chaque bloc une distinction entre son appartenance possible à un premier groupe de blocs fixes, à un deuxième groupe de blocs mobiles, ou à un troisième groupe dit de blocs découverts ;
- la figure 2 montre un exemple de réalisation d'un dispositif d'estimation conforme à l'invention ;
- la figure 3 montre un exemple de réalisation de l'estimateur récursif de déplacement prévu dans le dispositif de la figure 2 ;
- la figure 4 montre les quatre points A, B, C, D sur la luminosité desquels on opère pour déterminer celle du point X-DEPi ;
- la figure 5 montre un exemple de réalisation du circuit de décision à retardement prévu dans le dispositif de la figure 2 ;
- la figure 6 montre un exemple de réalisation du circuit de sauvegarde et de mise à jour prévu dans le circuit de la figure 5.

Dans de nombreuses applications, et notamment dans celle mentionnée plus haut, on est amené à traiter des séquences d'images numérisées et, plus particulièrement, à détecter l'existence de mouvements d'une image à la suivante. Le procédé et le dispositif d'estimation de mouvement qui vont être décrits reposent sur une méthode récursive d'estimation de déplacement, avec décision à retardement afin d'initialiser l'estimateur et améliorer ses performances. On supposera que, pour chacune des images successives, la valeur de la luminance de chaque point d'une image est numérisée. On supposera également que chaque image est subdivisée en blocs comprenant chacun $I \times J$ points d'image et qui sont balayés successivement, et que chacun de ces blocs est défini par deux coordonnées (m,n), m étant le rang de la ligne de l'image et n le rang du bloc sur cette m-ième ligne.

Selon l'invention, au fur et à mesure du balayage des blocs de l'image, ces blocs sont classés, avec un retard de L blocs, dans l'un des trois groupes suivants :

(a) groupe des blocs fixes ;
(b) groupe des blocs en mouvement ;
(c) groupe des blocs découverts.

Le sens précis de cette classification sera explicité plus loin. On verra également que ladite classification s'effectue pour chaque bloc en examinant un nombre déterminé de séquences de groupes possibles pour les L blocs qui suivent le bloc considéré.

Egalement selon l'invention, à chaque bloc considéré est associé un vecteur dit de déplacement dont la direction et l'amplitude vont être corrigées d'un bloc au suivant en fonction du groupe du bloc et de l'erreur de classification commise pour le point central du bloc, qui sera dans la suite de la description appelé point représentatif du bloc. Cette erreur n'est pas définie de façon identique pour les trois groupes : pour les points des blocs appartenant aux deux premiers groupes mentionnés, elle est égale à la différence de luminosité du point et de son point homologue dans l'image précédente compte tenu du déplacement qui a eu lieu par rapport à cette image précédente, tandis que, pour les points des blocs du troisième groupe, l'erreur d'estimation est déterminée par la variation de luminosité de l'image courante dans la direction verticale, c'est-à-dire d'une ligne à l'autre.

La classification opérée précédemment repose sur les considérations suivantes. Lorsqu'un objet se déplace dans une image, trois types de blocs peuvent être distingués :

(a) les blocs qui se situent dans la partie fixe de l'image, ce sont les blocs fixes ;

(b) les blocs qui sont visibles dans deux images successives mais à des emplacements différents, ce sont les blocs en mouvement ;

(c) les blocs qui sont devenus visibles après le déplacement de l'objet, ce sont les blocs qualifiés de découverts. Les points appartenant à ces blocs ne correspondent pas à un point de l'image précédente, et possèdent une corrélation spatiale plus forte : leur intensité lumineuse, par exemple, est plus proche de celle de la ligne précédente. Les blocs qui regroupent les points d'image appartenant à des zones différentes peuvent être classés dans le groupe qui conduit à la distorsion minimale.

De cette répartition en trois catégories de blocs, on déduit alors le critère objectif de classification qui sera ici adopté, à savoir pour les deux premiers types de blocs la somme des valeurs absolues de la différence de luminosité entre deux images successives, en tenant compte du déplacement des blocs pour les blocs en mouvement, et, pour le troisième type de blocs, la différence de luminosité entre deux lignes adjacentes.

Pour être efficace, la méthode récursive d'estimation de déplacement proposée doit donc distinguer les trois types de blocs définis et interagir ensuite de façon appropriée. L'initialisation du processus d'estimation doit permettre de retrouver ultérieurement le déplacement de l'objet en commençant par une estimation nulle pour les blocs traçant le contour de l'objet en mouvement, c'est-à-dire en ne prévoyant pas de vecteur de déplacement, à l'initialisation, pour les blocs formant ce contour. De tels blocs doivent donc être classés dans la troisième catégorie de blocs, celle des blocs découverts.

Ayant défini un critère de classification, il est également prévu, dans le cadre de l'invention, de minimiser l'erreur de classification due au caractère non optimal de ce critère en examinant, dans une certaine limite par souci de simplicité, l'influence d'un déplacement estimé pour un bloc sur le déplacement estimé pour les L blocs suivants. Cette influence peut être observée en construisant à cet effet un arbre de classification dont les branches successives correspondent aux trois groupes possibles auxquels sont supposés appartenir L blocs successifs (dans le sens du balayage) de l'image.

Un tel arbre comprend théoriquement $3^L$ branches, mais par souci de simplicité du dispositif, on a vu qu'on limiterait le nombre des branches observées, appelées par la suite branches survivantes.

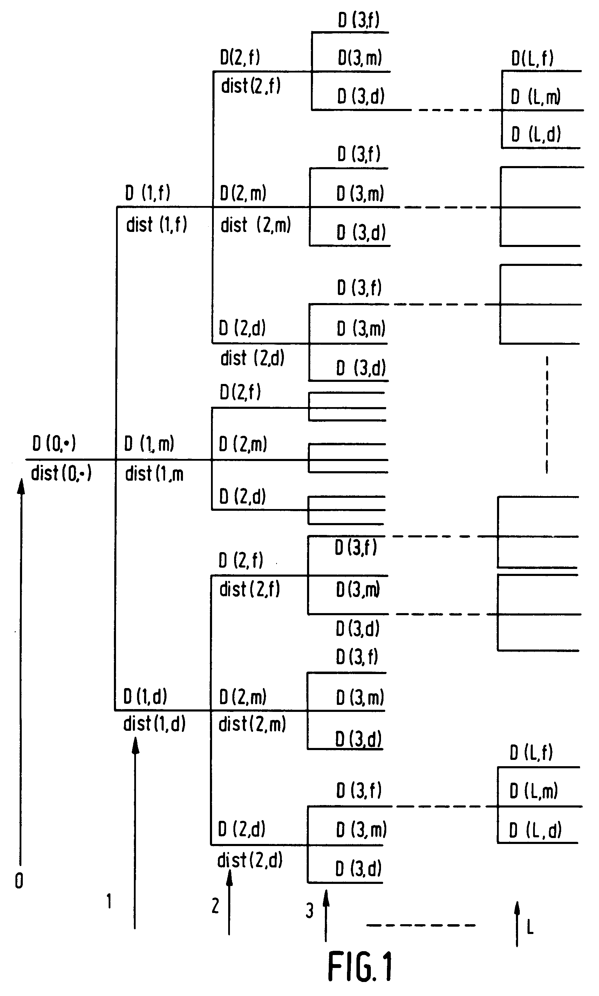

La procédure de construction simplifiée de l'arbre de classification est donc la suivante, en précisant qu'on appellera noeud l'intersection de plusieurs branches et qu'un tel arbre comprendra L niveaux correspondant chacun à un bloc de l'image. Si l'on part du premier bloc de l'image, celui-ci peut a priori appartenir à l'un des trois groupes définis (le groupe des blocs fixes, celui des blocs mobiles, celui des blocs découverts). Dans l'arbre de classification représenté sur la figure 1, trois branches relatives à ces trois groupes sont alors créées et, à chaque branche, sont associés deux paramètres.

Le premier de ces paramètres est le vecteur de déplacement noté D (niveau de l'arbre ; groupe possible), le niveau étant compris entre 0 et L, et le groupe étant représenté par f, m ou d (groupe des blocs fixes, mobiles, découverts, respectivement). Pour les deux premiers groupes de blocs, ce vecteur de déplacement dépend de celui qui était associé au noeud précédent (en l'occurrence le noeud zéro pour le premier des L blocs considérés) et est, par rapport à ce vecteur précédent, réactualisé d'une erreur d'estimation dD, à distinguer de l'erreur de classification. Pour le troisième groupe, le vecteur de déplacement est simplement égal à ladite erreur d'estimation, ce qui sous-entend dans ce cas l'initialisation de l'estimateur de mouvement (puisqu'il n'y a pas de vecteur de déplacement précédent) et donc, dans le principe même de la méthode, l'existence d'une rupture du caractère récursif de l'estimation. L'erreur d'estimation est elle-même proportionnelle au produit de la variation spatiale de luminosité du point homologue compte tenu du déplacement dans l'image précédente et de la différence de luminosité entre le point représentatif du bloc courant et son homologue dans l'image précédente.

Le second de ces paramètres est la distorsion cumulée, notée dist (niveau de l'arbre, groupe possible) comme précédemment. On appelle ainsi, dans la présente description, la somme cumulée des erreurs de classification des blocs précédents élevées au carré, les groupes de ces blocs étant ceux des branches parcourues dans l'arbre de classification pour arriver à la branche courante. Sur la figure 1, à chaque branche sont bien entendu associés, à chaque fois un vecteur D(.,.) et une distorsion dist (.,.), mais ces indications n'ont pas été toutes reproduites dès que les subdivisions de l'arbre deviennent nombreuses, afin de ne pas surcharger la figure.

Si l'on prend un exemple, pour le premier bloc de la séquence d'images traitée, cette distorsion est égale à l'erreur, élevée au carrée, des branches des premiers niveaux de l'arbre. A l'arrivée du deuxième bloc de l'image, trois branches sont construites dans l'arbre, à l'extrémité de chaque branche du niveau précédent, et les nouveaux paramètres correspondants (vecteur de déplacement, distorsion cumulée) sont calculés. Cette procédure est répétée pour chaque nouveau bloc de l'image et le nombre des branches est multiplié par trois, du moins tant que ce nombre global reste inférieur à une limite M du nombre de branches autorisées, nettement inférieure au nombre de branches maximal possible pour chaque bloc. Cette limite est fixée afin de limiter la complexité du dispositif. Dès que ce nombre est dépassé, on ne retient en fait, dans la construction de l'arbre, que les M branches de plus faible distorsion, les branches dites survivantes, alors que les $3^L$ - M autres branches sont éliminées, par exemple en imposant à leur distorsion une valeur infinie.

Une telle procédure est poursuivie jusqu'au Lième bloc de l'image. Après avoir, au terme de cette procédure, retenu les M branches de plus faible distorsion, une décision de type majoritaire est prise quant au groupe effectif et au vecteur de déplacement du premier bloc de l'image. Cette décision est bien à retardement puisque l'on a attendu d'être informé sur L blocs d'image supplémentaires avant de prendre ladite décision relative au bloc considéré précédant ces L blocs. La décision est prise de la manière suivante : en examinant les branches survivantes, le premier bloc est classé dans le groupe auquel correspond le plus grand nombre de ces branches survivantes, et le vecteur de déplacement correspondant est alors considéré comme étant le déplacement du premier bloc, et ainsi de suite... A partir du L-ième bloc, le procédé permet la détermination, à l'arrivée de chaque nouveau bloc, d'un groupe et d'un vecteur de déplacement qui correspondent au bloc précédant ce nouveau bloc de L blocs. Pour les L derniers blocs de l'image, ou plutôt de la séquence d'images quand on a choisi de traiter effectivement toute une séquence (par exemple 25 images en une seconde si l'on a choisi de traiter une seconde d'images), on évite simplement de prendre une décision majoritaire.

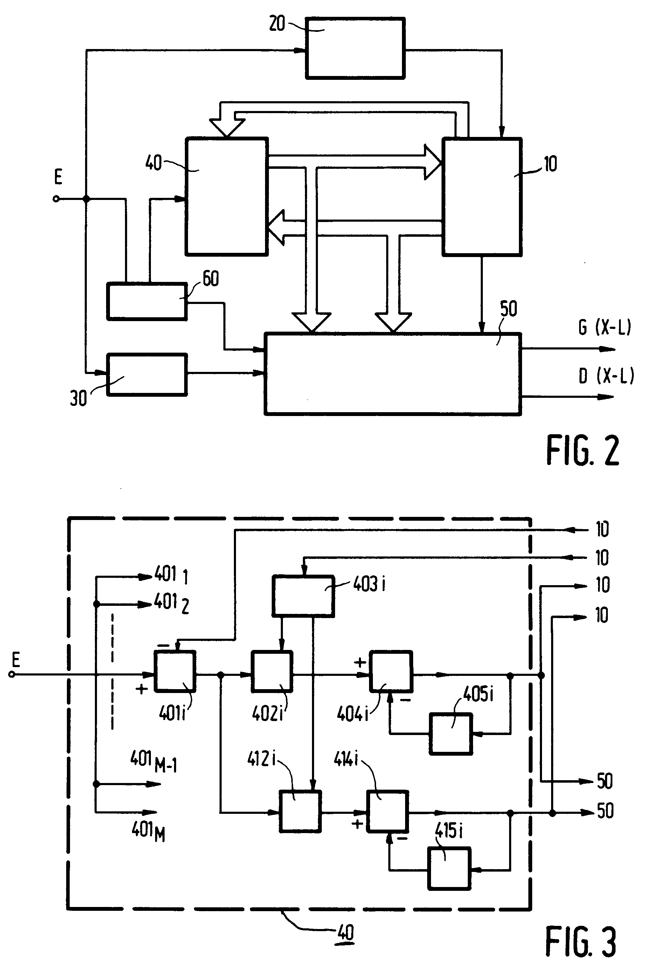

La figure 2 montre un exemple de réalisation d'un dispositif d'estimation permettant la mise en oeuvre de l'ensemble de cette procédure. Le dispositif représenté comprend une connexion d'entrée E sur laquelle se présentent les échantillons numériques constituant l'image d'entrée (par exemple à une fréquence d'échantillonnage égale à 13,5 mégahertz dans le cas d'une image vidéo). L'image d'entrée est envoyée d'une part vers une mémoire d'image 10, à laquelle est confié le rôle de sauvegarde de l'image précédente pendant le traitement de l'image courante. Un circuit à retard d'image 20 est donc placé entre la connexion E et l'entrée de la mémoire d'image 10. L'image d'entrée est d'autre part envoyée vers un circuit à retard de ligne 30, qui permet d'accéder au point courant de la ligne précédente de l'image courante (dans le cas des blocs découverts du troisième groupe). Les I lignes successives de l'image qui constituent chacune une ligne d'un bloc sont également mémorisées dans un circuit de mémoire 60 qui permet l'accès à la ligne courante des blocs. L'image d'entrée est enfin envoyée vers un estimateur récursif de déplacement 40 qui actualise à chaque extension de l'arbre de classification les vecteurs de déplacement relatifs aux noeuds de l'arbre.

Ces vecteurs de déplacement sont alors envoyés, en nombre M, vers un circuit de décision à retardement 50 qui en choisit le meilleur, selon le processus de décision majoritaire mentionné plus haut, comme étant l'estimation de déplacement du bloc considéré, ce circuit 50 déterminant donc un groupe et un vecteur de déplacement par bloc de séquence d'images, mais cette décision intervenant avec L blocs de retard. La mémoire d'image 10 destinée à permettre l'accès aux blocs de l'image précédente en tenant compte du vecteur de déplacement reçoit en provenance de l'estimateur récursif de déplacement 40 les M vecteurs de déplacement (les mêmes que ceux envoyés vers le circuit 50) concernant les M noeuds successifs de l'arbre de classification et lui fournit une période d'échantillonnage plus tard, après un adressage indirect, la luminosité des points homologues du nouveau point X représentatif du bloc courant, la désignation X symbolisant les coordonnées m, n de ce point représentatif du bloc courant c'est-à-dire des points X-DEP1, X-DEP-2, ..., X-DEPM de l'image précédente. La mémoire 10 fournit également au circuit 50 cette luminosité desdits points homologues.

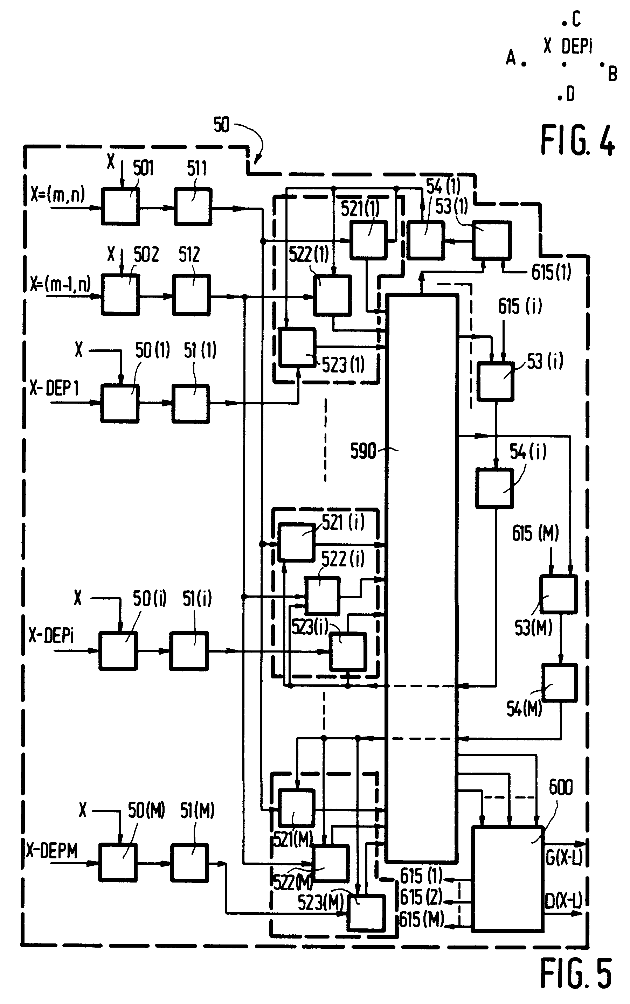

La figure 3 donne un exemple de réalisation de l'estimateur récursif de déplacement 40. Cet estimateur 40 comprend M circuits similaires opérant chacun sur une des M sorties de la mémoire d'image 10, et l'on ne décrira donc que l'un de ces circuits, composé des éléments 401i à 415i (i variant de 1 à M). Un soustracteur 401i reçoit d'une part sur son entrée par exemple positive l'image d'entrée présente sur la connexion d'entrée E et d'autre part sur son entrée négative la sortie de la mémoire d'image 10, c'est-à-dire la i-ième luminosité, et délivre comme signal de différence la différence de luminosité entre le point X représentatif du bloc courant et le point homologue X-DEPi de l'image précédente. Ce signal de sortie du soustracteur 401i est envoyé vers deux multiplieurs 402i et 412i qui en effectuent le produit par le gradient spatial de la luminosité au point X-DEPi, lui-même délivré sous forme vectorielle (gradient dans la direction m, gradient dans la direction n) par un circuit de gradient 403i qui opère sur la luminosité des points voisins A, B, C, D du point X-DEPi lue dans la mémoire d'image 10. La figure 4 montre ces quatre points A, B, C, D entourant le point X-DEPi dans l'image précédente, et ledit gradient spatial est donné par l'expression :

$$\mathtt{grad(X\text{-}DEPi)} = \frac{1}{2} \begin{vmatrix} \mathtt{A - B} \\ \mathtt{C - D} \end{vmatrix}$$

Le signal vectoriel de sortie des multiplieurs, qui est l'erreur d'estimation comme on l'a précisé plus haut, est alors traité par deux filtres récursifs sans pondération comprenant respectivement un soustracteur 404i et 414i et un circuit de retard d'un point 405i et 415i. Le circuit 405i (ou 415i) reçoit la sortie du soustracteur 404i (ou 414i) et la réintroduit, retardée, sur l'entrée négative de ce dernier, dont l'entrée positive reçoit ladite erreur d'estimation et délivre le nouveau vecteur de déplacement associé au point X représentatif du bloc courant considéré.

Les vecteurs DEP1, DEP2, ..., DEPM ainsi réactualisés sont envoyés d'une part, pour adressage, vers la mémoire d'image 10, où ils prennent la place des précédents, et d'autre part vers le circuit de décision à retardement 50, représenté sur la figure 5 dans un mode particulier de réalisation conforme à l'invention. Ce circuit 50 comprend tout d'abord (M + 2) circuits soustracteurs 501, 502, et 50(1) à 50(M) qui calculent les erreurs de classification, par évaluation de la différence de luminosité entre les points de l'image précédente et les points de l'image courante, sauf pour le soustracteur 502 où cette différence est évaluée entre les points de la ligne précédente et ceux de la ligne courante ; les chiffres entre parenthèses désignent dans les références 50(1) à 50(M) les noeuds de l'arbre de classification. Les valeurs ainsi obtenues sont alors élevées au carré dans les (M + 2) circuits 511, 512, et 51(1) à 51(M). Les sorties des circuits 51(1) à 51(M) sont envoyées vers 3M accumulateurs permettant d'obtenir la somme des erreurs de classification pour tous les points d'image qui forment le bloc courant. Ces circuits sont suivis des circuits 521(1) à 521(M). La sortie de ces circuits d'élévation au carré est en effet envoyée vers 3M premiers additionneurs 521(1) à 521(M), 522(1) à 522-(M), 523(1) à 523(M) de la façon suivante : 511 vers 521(1) à 521(M), 512 vers 522(1) à 522(M), 51(1) à 51(M) vers 523(1) à 523(M) respectivement. Les 3M additionneurs reçoivent sur leur autre entrée les distorsions des noeuds présentes en sortie de M circuits à retard 54(1) à 54(M) eux-mêmes précédés de M additionneurs 53(1) à 53-(M). Le rôle de ces additionneurs et circuits à retard est précisé ci-dessous.

Les signaux de sortie des 3M premiers additionneurs représentent alors les distorsions cumulées des 3M branches, avant élimination de 2M branches de plus forte distorsion, et sont envoyés vers le circuit de tri 590. Ce dernier est chargé de trier, parmi ces 3M signaux reçus, ceux qui représentent les M plus faibles valeurs de distorsion cumulée et de les envoyer vers les premières entrées respectives de M additionneurs 53(1) à 53-(M), et de délivrer en plus de ces M valeurs de distorsion et en correspondance à chacune d'elles un indice correspondant au classement qu'elles ont à l'entrée du circuit de tri.

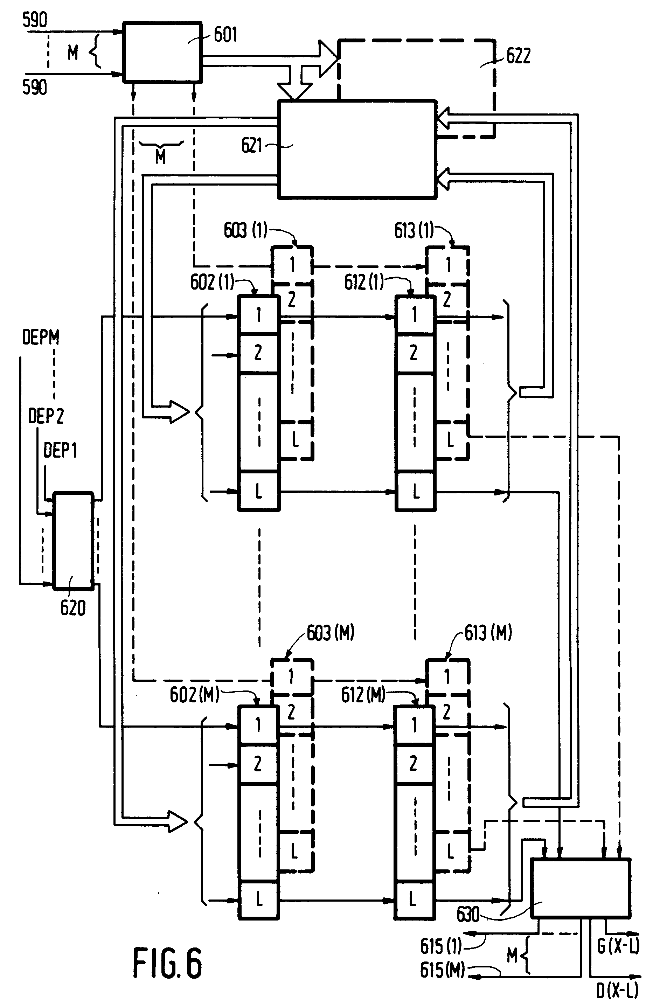

Ces M indices sont ensuite utilisés par un circuit 600 de sauvegarde et de mise à jour de l'arbre de classification. Ce circuit 600, représenté dans un mode particulier de réalisation sur la figure 6, comprend dans le cas présent un circuit décodeur 601 qui extrait les deux informations denuméro de branche (dont on déduit le groupe) et de numéro de noeud, par exemple à l'aide d'une mémoire ROM (mémoire morte ne pouvant qu'être lue ; en anglais Read-Only Memory) programmée de façon à fournir pour chaque adresse comprise entre 1 et 3M un quotient et un reste calculés comme indiqué ci-après : après avoir majoré chaque indice de 2 et divisé chaque indice (ainsi majoré) par trois, on en déduit (a) le quotient, qui indique le numéro de noeud (entre 1 et M) du dernier niveau de l'arbre de classification et (b) le reste, qui est égal à 1/3, 0, ou 2/3, valeurs auxquelles on fait correspondre respectivement le groupe de la branche à laquelle est associée la distorsion, c'est-à-dire le premier groupe des blocs fixes, le deuxième groupe des blocs mobiles, ou le troisième groupe des blocs découverts.

Le circuit de sauvegarde et de mise à jour comprend également 2M registres principaux 602-(1), 602(2),..., 602(M), 603(1), 603(2),..., 603(M), et 2M registres auxiliaires 612(1), 612(2),..., 612(M), 613(1), 613(2),..., 613(M). Ces 4M registres à décalage contiennent chacun L cases destinées à L mots relatifs à la longueur (c'est-à-dire au nombre de niveaux) de l'arbre de classification. Les premiers de ces registres (c'est-à-dire les 2M registres principaux) mémorisent les informations qui concernent le niveau le plus récent (c'est-à-dire le point X représentatif du bloc courant de l'image) et ainsi de suite. Les M registres principaux 602(1) à 602(M) et les M registres auxiliaires 612(1) à 612-(M) mémorisent les vecteurs de déplacement pour les L niveaux successifs de l'arbre de classification, tandis que les M registres principaux 603(1) à 603-(M) et les M registres auxiliaires 613(1) à 613(M) mémorisent de même pour les L niveaux successifs les informations de groupe des branches survivantes. Le contenu de ces registres permet de reconfigurer l'arbre de classification de telle sorte que les noeuds soient rangés dans l'ordre décroissant de leur distorsion, cette reconfiguration étant opérée comme on va l'expliquer plus en détail.

Sur la figure 6, on peut voir, d'une part entre le multiplexeur 621 et les registres principaux 602(1) à 602(M) et d'autre part entre les registres auxiliaires 612 (1) à 612 (M) et ce même multiplexeur, M connexions de transfert respectives, se distinguant des autres tracés de la figure en ce qu'elles sont représentées chacune par une flèche épaissie. Bien entendu, M connexions similaires, qui devraient être représentées de façon rigoureusement identique aux M connexions ci-dessus, existent également d'une part entre le multiplexeur 622 et les registres principaux 603(1) à 603(M) et d'autre part entre les registres auxiliaires 613(1) à 613(M) et ce multiplexeur, pour permettre la réalisation des mêmes fonctions de mémorisation, sauvegarde, mise à jour que celle autorisées par la présence des M premières connexions. Pour simplifier la lecture et la compréhension de cette figure 6, on a cependant volontairement omis de représenter ces M nouvelles connexions de liaison entre les éléments 622, 603(1) à 603(M) et 613(1) à 613 (M), et, au lieu de représenter en traits continus lesdits éléments, ils l'ont été en traits interrompus de même que les M connexions conduisant du décodeur 601 aux registres 603(1) à 603(M), les M × L connexions conduisant des registres 603(1) à 603-(M) aux registres 613(1) à 613(M), et les M connexions conduisant des registres 613(1) à 613-(M) au circuit de décision majoritaire 630.

Pour la reconfiguration, dans un premier temps, les contenus des 2M registres principaux 602(1) à 602(M) et 603(1) à 603(M) sont transférés respectivement dans les 2M registres auxiliaires 612(1) à 612(M) et 613(1) à 613(M) destinés à sauvegarder l'arbre de classification avant sa réorganisation. Ce transfert rend les 2M registres principaux prêts à recevoir la nouvelle configuration de l'arbre de classification, sans que soit pour autant perdue l'ancienne. Dans un deuxième temps, les contenus des 2M registres auxiliaires 612(1) à 612-(M) et 613(1) à 613(M) sont renvoyés par l'intermédiaire des multiplexeurs 621 et 622 (621 pour les vecteurs de déplacement, 622 pour les informations de groupe) vers les 2M registres principaux 602(1) à 602(M) et 603(1) à 603(M), afin de ranger lesdits contenus dans les registres principaux dans l'ordre décroissant des distorsions associées. Les registres principaux 602(K) et 603(K), par exemple, contiennent, après de telles opérations de transfert, respectivement les vecteurs de déplacement et les groupes de la branche d'arbre dont la distorsion est la K-ième dans l'ordre décroissant de celles-ci.

Pour introduire les informations concernant le bloc courant, les deux opérations suivantes sont en fait nécessaires :

(a) les premiers mots des M registres principaux 603(1) à 603(M) sont chargés par le numéro de groupe des branches de niveau X (niveau relatif au point X) qui luimême provient du circuit décodeur 601, celui-ci ayant en effet fourni le reste de la division par 3 des numéros des M noeuds de plus faible distorsion ;

(b) les vecteurs de déplacement DEP1, DEP2,..., DEP(M) provenant du circuit 40 par l'intermédiaire d'un circuit de multiplexage 620 sont sauvegardés dans les premiers mots des M registres principaux 602(1) à 602(M) si les branches correspondantes sont associées au groupe des blocs fixes ou au groupe des blocs en mouvement, ces mots étant mis à zéro dans le cas contraire (initialisation).

Une décision à retardement va alors être prise par le circuit de décision majoritaire 630. Ce circuit examine en effet les L-ièmes mots des M registres principaux 603(1) à 603(M) et détermine le groupe dont le nombre d'occurrence est le plus grand (c'est-à-dire le groupe qui revient le plus souvent). Si c'est alors le registre 603(K), par exemple, qui mémorise ce groupe, les contenus du L-ième mot des registres principaux 603(K) et 602(K) sont considérés comme étant respectivement le groupe G(X-L) et le vecteur de déplacement D(X-L) du bloc X-L. Ce sont ces deux informations qui sont fournies en sortie du circuit de décision majoritaire 630, c'est-à-dire, en fait, en sortie du circuit 50 comme l'indique la figure 2. Afin d'éliminer les branches qui ne conduisent pas à ce groupe pour le bloc X-L de l'image, lorsque le contenu du L-ième mot diffère du groupe décidé (lui-même indiqué dans le L-ième mot du registre 603 (K)) on donne à la distorsion cumulée une valeur infinie, ou tout au moins très grande, par exemple par addition d'une valeur supérieure à la luminosité maximale de l'image numérisée.

Des signaux 615(1) à 615(M) de sortie du circuit 600, qui sont égaux à la luminosité maximale pour des branches à effacer et nuls pour les autres, sont envoyés vers les deuxièmes entrées respectives des M additionneurs 53(1) à 53(M) suivis des circuits à retards 54(1) à 54(M) respectivement. Ces circuits à retards retardent d'une période d'échantillonnage les signaux qui les traversent. La décision finale étant maintenant prise, les mots des 2M registres principaux 602(1) à 602(M) et 603(1) à 603(M) sont décalés vers le bas, et ces registres sont prêts pour une nouvelle opération de décision à retard, chaque décision étant bien entendu suivie d'un décalage d'une unité des registres principaux et auxiliaires.

## Revendications

1. Procédé d'estimation de mouvement dans une séquence d'images dans laquelle, chaque image étant divisée en blocs de I × J points et la luminosité de chaque point étant exprimée de façon numérique, chacun de ces blocs est défini par deux coordonnées (m,n) indiquant respectivement le rang de la ligne de l'image où se trouve le bloc et le rang du bloc sur cette m-ième ligne, caractérisé en ce qu'il consiste à :

(A) prévoir par rapport à l'image courante la sauvegarde de l'image précédente pour constituer une image de référence ;

(B) définir pour les blocs trois groupes de classification en blocs fixes, en blocs mobiles et en blocs dits découverts, groupes dans lesquels les blocs vont, avec un retard de L blocs, être classés au fur et à mesure du balayage de l'image, en examinant un nombre déterminé de séquences de groupes possibles pour les L blocs qui suivent le bloc courant X considéré et selon un critère de classification déterminé, ledit critère étant, pour les blocs fixes et mobiles, la différence de luminosité entre deux images successives, en tenant compte du déplacement des blocs d'une image à l'autre pour les blocs mobiles, et, pour les blocs découverts, la différence de luminosité entre deux lignes adjacentes ;

(C) construire un arbre de classification dont les $3^L$ branches, à chaque niveau successif, sont en nombre égal à celui des groupes possibles et correspondent, du premier au L-ième niveau, aux séquences des groupes possibles pour les L blocs successifs considérés de la séquence d'images ;

(D) associer à chaque branche de chaque niveau deux paramètres :

(a) un premier paramètre dit vecteur de déplacement, représentatif du déplacement éventuel du bloc par rapport à l'image ou à la ligne précédente et calculé, à l'aide d'une méthode récursive d'estimation de déplacement, pour le point central représentatif dudit bloc ;

(b) un deuxième paramètre dit distorsion cumulée, représentatif de la somme cumulée des erreurs de classification des blocs précédents, les groupes de ces blocs étant ceux des branches de l'arbre parcourues pour arriver à la branche courante, chaque erreur de classification étant rendue minimale en tenant compte de l'influence d'un déplacement estimé pour un bloc sur le déplacement estimé pour les L blocs suivants, et ladite influence n'étant examinée, parmi les $3^L$ branches possibles de l'arbre, que pour M branches de plus faible distorsion cumulée, dites survivantes, M étant un nombre limite choisi nettement inférieur au nombre maximal de branches $3^L$ ;

(E) au terme de cette procédure portant sur L blocs, prendre une décision de type majoritaire quant au groupe effectif et au vecteur de déplacement du bloc situé par rapport au bloc courant L blocs plus tôt, ladite décision étant prise en examinant les branches survivantes et en classant chaque bloc situé L blocs plus tôt dans le groupe auquel correspond le plus grand nombre de ces branches survivantes, le vecteur de déplacement correspondant étant alors considéré comme le déplacement de ce bloc situé L blocs plus tôt, et ladite procédure de décision étant répétée à l'identique sauf pour les L derniers blocs de la séquence d'images où l'on évite de prendre une décision.

2. Dispositif d'estimation de mouvement dans une séquence d'images, prévu pour la mise en oeuvre du procédé selon la revendication 1 et caractérisé en ce qu'il comprend une mémoire d'image recevant de la connexion d'entrée, par l'intermédiaire d'un circuit à retard d'image, la séquence d'images numérisée, un circuit à retard de ligne recevant également la séquence d'images numérisée, et un estimateur récursif de déplacement, recevant également la séquence d'images numérisée pour actualiser à chaque extension de l'arbre de classification les vecteurs de déplacements relatifs aux noeuds de l'arbre et les envoyer vers un circuit de décision à retardement, lesdits vecteurs étant également envoyés vers la mémoire d'image qui renvoie audit estimateur et audit circuit de décision la luminosité des points homologues du point X représentatif du bloc courant dans l'image précédente.

3. Dispositif selon la revendication 2, caractérisé en ce que le circuit de décision à retardement comprend :

(A) (M + 2) circuits soustracteurs dont le premier et les M derniers calculent les erreurs de classification par évaluation de la différence de luminosité entre les blocs de l'image précédente et ceux de l'image courante, le deuxième soustracteur calculant cette erreur par évaluation de cette différence entre les points de la ligne précédente et ceux de la ligne courante ;

(B) 3 M additionneurs dont les signaux de sortie représentent les distorsions cumulées des 3M branches de l'arbre de classification ;

(C) un circuit de tri recevant ces 3M signaux de sortie et délivrant parmi ceux-ci ceux qui représentent les M plus faibles valeurs de distorsion cumulée, ces M signaux sélectionnés étant accompagnés d'un indice correspondant au classement qu'ont ces signaux à l'entrée du circuit de tri ;

(D) un circuit de sauvegarde et de mise à jour de l'arbre de classification recevant d'une part lesdits M indices sélectionnés et d'autre part les vecteurs de déplacement pour les L niveaux successifs de l'arbre de classification et délivrant, pour le bloc précédant de L blocs le bloc courant, les informations relatives à son groupe et à son vecteur de déplacement.

4. Dispositif selon la revendication 3, caractérisé en ce que le circuit de sauvegarde et de mise à jour comprend :

(A) un premier jeu de M registres principaux et de M registres auxiliaires tous de L cases, respectivement prévus les premiers pour la mémorisation des vecteurs de déplacement provenant de l'estimateur récursif de déplacement par l'intermédiaire d'un circuit de multiplexage et les seconds pour la sauvegarde, avant réorganisation, de ces vecteurs et le retour de ceux-ci, après réorganisation dans l'ordre décroissant des distorsions, vers lesdits registres principaux par l'intermédiaire d'un premier multiplexeur ;

(B) un deuxième jeu de M registres principaux et de M registres auxiliaires, tous de L cases, respectivement prévus, de même, les premiers pour la mémorisation des informations de groupe des branches survivantes, provenant du circuit de tri par l'intermédiaire d'un décodeur, pour les L niveaux successifs, et les seconds pour la sauvegarde, avant réorganisation, de ces informations de groupe et le retour de celles-ci, après réorganisation dans l'ordre décroissant des distorsions, vers lesdits registres principaux par l'intermédiaire d'un deuxième multiplexeur ;

(C) un circuit de décision majoritaire destiné à recevoir les contenus des L-ièmes mots des registres et à déterminer le groupe dont le nombre d'occurrence est le plus grand, le contenu de celui des registres qui mémorise ce groupe étant alors considéré comme le groupe G(X-L) du bloc précédant de L blocs le bloc courant, et le vecteur de déplacement contenu dans le registre principal correspondant étant considéré de même comme le vecteur de déplacement D(X-L) dudit bloc précédant de L blocs le bloc courant, et chacune des décisions prise par ledit circuit de décision majoritaire étant suivie d'un décalage d'une unité des registres principaux et auxiliaires.

## Claims

1. A method of estimating motion in a picture sequence in which each picture is divided into blocks of I x J elements and in which the luminosity of each element is expressed in a digital form and each of these blocks is defined by two coordinates (m,n), respectively, indicating the row of the picture line in which the block is present and the row of the block on this m-th line, characterized in that it consists of: (A) preserving the preceding picture with respect to the current picture for constituting a reference picture;

(B) defining three groups for the blocks classified in fixed blocks, moving blocks and blocks referred to as exposed blocks, in which groups the blocks are classified with a delay of L blocks in accordance with the scanning of the picture by examining a given number of possible group sequences for the L blocks succeeding the current block X considered and in accordance with a given classification criterion, said criterion for the fixed and moving blocks being the difference in luminosity between two successive pictures, taking the displacement of the blocks of one picture with respect to the other into account for the moving blocks, and the difference in luminosity between two adjacent lines for the exposed blocks;

(C) constructing a classification tree whose $3^L$ branches at each successive level are equal in number to those of the possible groups and which correspond from the first to the Lth level to the sequences of possible groups for the L considered successive blocks of the picture sequence;

(D) associating two parameters with each branch of each level:

(a) a first parameter referred to as displacement vector representative of the possible displacement of the block with respect to the picture or to the preceding line and determined, by means of a recursive displacement estimation method, for the central element which is representative of the said block;

(b) a second parameter referred to as cumulated distortion representative of the cumulative sum of the classification errors of the preceding blocks, the groups of these blocks being those of the tree branches traversed to arrive at the current branch, each classification error being rendered minimum by taking into account the influence of a displacement estimated for a block on the displacement estimated for the L following blocks, said influence being only examined, among the $3^L$ possible branches of the tree, for M branches of the weakest cumulated distortion referred to as surviving branches, where M is a limited number chosen to be substantially smaller than the maximum number of branches $3^L$;

(E) in accordance with this procedure relating to L blocks, taking a decision of the majority type concerning the effective group and concerning the displacement vector of the block situated L blocks earlier with respect to the current block, said decision being taken by examining the surviving branches and by classifying each block situated L blocks earlier in the group to which the largest number of these surviving branches corresponds, the corresponding displacement vector being thus considered as the displacement of this block situated L blocks earlier, said decision procedure being identically repeated but for the L last blocks of the picture sequence in which one avoids taking a decision.

2. A device for estimating motion in a picture sequence provided for carrying out the method as claimed in Claim 1 and characterized in that it comprises a picture memory receiving the numbered picture sequence from its input connection via a picture delay circuit, a line delay circuit also receiving the numbered picture sequence and a recursive displacement estimator also receiving the numbered picture sequence for updating at each extension of the classification tree the displacement vectors relative to the nodes of the tree and for applying them to a delay decision circuit, said vectors being also applied to the picture memory which returns the luminosity of the homologue elements of the element X representative of the current block in the preceding picture to the said estimator and the said decision circuit.

3. A device as claimed in Claim 2, characterized in that the delay decision circuit comprises:

(A) (M + 2) subtractor circuits of which the first and the M last calculate the classification errors by estimating the difference in luminosity between the blocks of the preceding picture and those of the current picture, the second subtractor calculating said error by estimating this difference between the elements of the preceding line and those of the current line;

(B) 3M adders whose output signals represent the cumulated distortions of the 3M branches of the classification tree;

(C) a sorting circuit receiving these 3M output signals and delivering among these signals those which represent the M weakest values of the cumulated distortion, said M selected signals being accompanied by an index corresponding to the classification of these signals at the input of the sorting circuit;

(D) a circuit for preserving and updating the classification tree receiving at one end the said M selected indices and at the other end the displacement vectors for the L successive levels of the classification tree and supplying, for the block preceding the current block by L blocks, the data relative to its group and its displacement vector.

4. A device as claimed in Claim 3, characterized in that the preservation and updating circuit comprises:

(A) a first set of M principal registers and M auxiliary registers all having L positions, the first being provided for memorization of the displacement vectors originating from the recursive displacement estimator by means of a multiplier circuit and the second being provided for the preservation of these vectors before reorganization and the return of these vectors after reorganization in a decreasing order of the distortions to the said principal registers by means of a first multiplier;

(B) a second set of M principal registers and M auxiliary registers all having L positions, the first being likewise provided for the memorization of the data of the group of surviving branches originating from the sorting circuit by means of a decoder for the L successive levels, and the second being provided for the preservation of these data of the group before reorganization and the return of these data after reorganization in the decreasing order of the distortions to the said principal registers by means of a second multiplier;

(C) a majority decision circuit intended to receive the contents of the Lth words of the registers and to determine the group whose number of occurrence is the largest, the contents of that one of the registers which memorizes this group being considered as the group G(X - L) of the block preceding the current block by L blocks, and the displacement vector in the corresponding principal register being also considered as the displacement vector D(X - L) of the said block preceding the current block by L blocks, and each of the decisions taken by the said majority decision circuit being followed by a shift by one unit of the principal and auxiliary registers.

**Patentansprüche**

1.  Verfahren zur Abschätzung von Bewegung in einer Bildfolge, wobei jedes Bild in Blöcke von I x J Bildpunkten aufgeteilt und die Leuchtdichte jedes Punktes digitalisiert wird, wobei jeder der Blöcke durch zwei Koordinaten (m, n) definiert wird, die den Stellenwert der Bildzeile, wo der Block sich befindet, sowie den Stellenwert des Blockes auf dieser m. Zeile angeben, dadurch gekennzeichnet, daß das Verfahren die nachfolgenden Verfahrensschritte aufweist:

    (A) das in bezug auf das augenblickliche Bild Aufbewahren des vorhergehenden Bildes zum Erzeugen eines Bezugsbildes;

    (B) das Definieren von drei Klassifizierungsgruppen für die Blöcke, und zwar feste Blöcke, bewegliche Blöcke und sogenannte freie Blöcke, in welchen Gruppen die Blökke, mit einer Verzögerung von L Blöcken, entsprechend der Bildabtastung klassifiziert werden, und zwar durch Überprüfung einer bestimmten Anzahl möglicher Gruppenfolgen für die dem betreffenden, augenblicklichen Block X folgenden L Blöcke und entsprechend einem bestimmten Klassifizierungskriterium, das für die festen und beweglichen Blöcke die Leuchtdichtedifferenz zwischen zwei aufeinanderfolgenden Bildern ist, unter Berücksichtigung jedoch der Bewegung der Blöcke des einen Bildes gegenüber dem anderen Bild für die beweglichen Blöcke und, und wobei das Kriterium für die freien Blöcke, die Leuchtdichtedifferenz zwischen zwei benachbarten Zeilen ist;

    (C) das Konstruieren eines Klassifizierungsbaumes, von dem die $3^L$ Zweige auf jedem folgenden Pegel, in der Zahl, denen der etwaigen Gruppen entsprechen und vom ersten bis zum L. Pegel den Folgen etwaiger Gruppen für die betreffenden aufeinanderfolgenden L Blöcke der Bildfolge entsprechen;

    (D) das jedem Zweig jedes Pegels Zuordnen zweier Parameter:

    (a) einen ersten als Verschiebungsvektor bezeichneten Parameter, der für die etwaige Verschiebung des Blockes gegenüber dem vorhergehenden Bild oder der vorhergehenden Zeile repräsentativ und mit Hilfe eines rekursiven Verschiebungsabschätzungsverfahrens berechnet ist, für den zentralen Punkt, der für den genannten Block repräsentativ ist;

    (b) einen zweiten als summierte Verzerrung bezeichneten Parameter, der für die Summierung der Klassifizierungsfehler der vorhergehenden Blöcke repräsentativ ist, wobei die Gruppen dieser Blöcke diejenigen der Zweige des Baumes sind, die durchlaufen wurden um bei dem augenblicklichen Zweig zu gelangen, wobei jeder Klassifizierungsfehler dadurch minimal gehalten wird, daß der Einfluß einer für einen Block abgeschätzten Verschiebung auf die für die L nachfolgenden Blöcke abgeschätzte Verschiebung berücksichtigt wird, wobei dieser Einfluß aus den $3^L$ möglichen Zweigen des Baumes nur für M Zweige mit der geringsten summierten Verzerrung, die als Überlebungszweige bezeichnet werden, wobei M eine beschränkte Zahl ist, im wesentlichen kleiner als die maximale Anzahl Zweige $3^L$;

    (E) entsprechend diesem Verfahren in bezug auf L Blöcke, das Treffen einer Hauptentscheidung was die effektive Gruppe anbelangt sowie den Verschiebungsvektor des gegenüber dem augenblicklichen Block um L Blöcke vorhergehenden Block, wobei diese Entscheidung durch Prüfung der Überlebungszweige getroffen wird sowie durch Klassifizierung jedes um L Blöcke vorhergehenden Blockes in der Gruppe, der die meisten dieser Überlebungszweige zugeordnet sind, wobei der entsprechende Verschiebungsvektor dadurch als die verschiebung dieses um L Blöcke vorhergehenden Blokkes betrachtet wird, und wobei diese Entscheidungsprozedur auf identische Weise, mit Ausnahme der L letzten Blöcke der Bildfolge, in der vermieden wird, eine Entscheidung zu treffen, wiederholt wird.

2.  Anordnung zum Abschätzen einer Bewegung in einer Bildfolge zum Durchführen des Verfahrens nach Anspruch 1 und dadurch gekennzeichnet, daß sie einen Bildspeicher aufweist, der über eine Bildverzögerungsschaltung von der Eingangsverbindung die numerierte Bildfolge erhält, wobei eine Zeilenverzögerungsschaltung ebenfalls die numerierte Bildfolge erhält, sowie eine rekursive Verschiebungsabschätzschaltung , die ebenfalls die numerierte Bildfolge erhält zum bei jeder Erweiterung des Klassifizierungsbaumes Aktualisieren der Verschiebungsvektoren gegenüber den Knoten des Baumes und zum Übertragen derselben zu einer Verzögerungsentscheidungsschaltung, wobei die genannten Vektoren ebenfalls dem Bildspeicher zugeführt werden, der zu der Abschätzschaltung und der Entscheidungsschaltung die Leuchtdichte der homologen Punkte des für den augenblicklichen Block in dem vorhergehenden Bild repräsentativen Punktes X zurückführt.

3. Anordnung nach Anspruch 2, dadurch gekennzeichnet, daß die Verzögerungsentscheidungsschaltung die nachfolgenden Elemente aufweist:

(A) (M + 2) Subtrahierschaltungen, von denen die erste und die M letzten die Klassifizierungsfehler berechnen, und zwar durch Bewertung der Leuchtdichte-Differenz zwischen den Blöcken des vorhergehenden Bildes und denen des augenblicklichen Bildes, wobei die zweite Subtrahierschaltung diesen Fehler durch Bewertung dieser Differenz zwischen den Punkten der vorhergehenden Zeile und denen der augenblicklichen Zeile berechnet;

(B) 3 M Addierschaltungen, deren Ausgangssignale die summierten Verzerrungen der 3M Zweige des Klassifizierungsbaumes darstellen;

(C) eine Sortierschaltung, welche die 3M Ausgangssignale erhält und daraus diejenigen liefert, welche die M niedrigsten Werte der summierten Verzerrung darstellen, wobei diese M selektierten Signale mit einem Index versehen sind, der der Klassifizierung entspricht, welche diese Signale am Eingang der Sortierschaltung haben;

(D) eine Speicher- und Aktualisierungsschaltung für den Klassifizierungsbaum, wobei diese Schaltung einerseits die genannten M selektierten Indizes und andererseits die Verschiebungsvektoren für die aufeinanderfolgenden L Pegel des Klassifizierungsbaumes erhält und die für den Block, der dem augenblicklichen Block um L Blöcke vorhergeht, die Informationen in bezug auf die Gruppe und den Verschiebungsvektor liefert.

4. Anordnung nach Anspruch 3, dadurch gekennzeichnet, daß die Speicher- und Aktualisierungsschaltung die nachfolgenden Elemente aufweist:

(A) einen ersten Satz von M Hauptregistern und M Hilfsregistern mit je L Stellen, wobei die ersten zur Speicherung der mittels einer Multiplizierschaltung von der rekursiven Verschiebungsabschätzungsschaltung herrührenden Verschiebungsvektoren vorgesehen sind und die zweiten zur Speicherung, vor Reorganisierung, dieser Vektoren und der Rückkehr derselben, nach Reorganisierung in abnehmender Ordnung der Verzerrungen zu den genannten Hauptregistern mittels eines ersten Multiplizierers vorgesehen sind;

(B) einen zweiten Satz von M Hauptregistern und M Hilfsregistern mit je L Stellen, wobei auch hier für die L aufeinanderfolgenden Pegel die ersten zur Speicherung der mittels eines Dekoders von der Sortierschaltung herrührenden Informationen der Gruppe von Überlebungszweigen vorgesehen sind, und wobei die zweiten zur Speicherung, vor der Reorganisierung, dieser Gruppeninformationen und der Rückkehr derselben, nach der Reorganisierung, in abnehmender Folge der Verzerrungen zu den genannten Hauptregistern mittels eines zweiten Multiplizierers vorgesehen sind;

(C) eine Hauptentscheidungsschaltung zum Erhalten des Inhaltes der L. Wörter der Register und zum Ermitteln der Gruppe, deren Anzahl Auftritte am größten ist, wobei der Inhalt desjenigen Registers, das diese Gruppe speichert, als die Gruppe G(X-L) des den augenblicklichen Block um L Blöcken vorhergehenden Blockes betrachtet wird und wobei der in dem entsprechenden Hauptregister vorhandene Verschiebungsvektor an sich als der Verschiebungsvektor D(X-L) des genannten dem augenblicklichen Block um L Blöcke vorhergehenden Blokkes betrachtet wird, und wobei jeder von der genannten Hauptentscheidungsschaltung getroffenen Entscheidung eine Verschiebung um eine Einheit der Haupt- und Hilfsregister folgt.

FIG.1

FIG. 2

FIG. 3

.C

X DEPi

A. .

. .B

.D

**FIG. 4**

**FIG. 5**

FIG.6